# EUROPEAN PATENT SPECIFICATION

(11) **EP 2 746 161 B1**
(45) Date of publication and mention of the grant of the patent: **17.08.2016**
(21) Application number: 12382525.9
(22) Date of filing: 21.12.2012
(51) Int. Cl.: B64D 45/02, B64D 7/00

(54) **Lightning resistant aircraft structure and method of retrofitting a structure**
Blitzbeständige Flugzeugstruktur und Verfahren zum Nachrüsten einer Struktur
Structure d'aéronef résistant à la foudre et procédé de rééquipement d'une structure

(43) Date of publication of application: 25.06.2014
(73) Proprietor: Airbus Defence and Space SA, 28906 Getafe Madrid (ES)
(72) Inventor: Sequeiro Murciano, Felipe, E-28906 Getafe (Madrid) (ES); Cano Pérez, Fernando, E-28906 Getafe (Madrid) (ES); Rubio Garcia, Luis, E-28906 Getafe (Madrid) (ES)
(74) Representative: ABG Patentes, S.L.

(56) References cited:
- DE-A1-102011 008 574
- JP-A- H02 183 798
- US-A1- 2012 106 022

## Description

### TECHNICAL FIELD OF THE INVENTION

The present invention belongs to the field of aircraft structures and, more particularly, to the field of composite aircraft structures and relates to an aircraft structure which prevents puncture of composite constructions when they are struck by lightning.

### BACKGROUND OF THE INVENTION

The intensive use of carbon fiber (CF) composite materials in aircraft structures has drastically weakened the protection of both airframe and on-board systems against the adverse electromagnetic environment that can be met during flight (lightning strike and high intensity electric fields). This is mainly due to the extremely low values of both the electrical and thermal conductivities of the CF laminates as compared to conventional metallic structures.

To improve the external electrical conductivity of these composite structural elements, a metallization layer is usually added over the external surface of the composite structural element, this metallization layer acting as a sacrificial ply to reduce the damage when the aircraft is struck by lightning.

The effectiveness of this metallization layer, however, is drastically jeopardized when a thick dielectric material, such as the external environment coating and decorative paint present in aircrafts, is applied on top. In this case, regardless its thickness and conductivity, the lightning protection becomes ineffective and large damages -even perforation of the composite element- happen. This is mainly due to the lightning arc being constrained to just a single point because of the high dielectric strength of the coating, instead of wandering over the metalized surface. To sum up, the extent of damage is reduced but its depth is enlarged up to puncturing.

It is known that the damage is not only produced by the electrical and thermal threat, but also it is due to the acoustic shock wave of the strike together with the detonation effect of the overpressure created by the resin vaporization and other melted particles.

US 2012/0106022 A1 tries to solve this problem by providing a metallization layer on a surface likely to be subjected to lightning impacts, the metallization layer including two different electrically conductive metal materials with different vaporization temperatures, so that when a lightning impacts on the layer, the difference in the vaporized surface between the two materials promotes the anchoring of the lightning arc base to the metallization preventing the lightning arc root from attaching itself directly to the composite.

WO 2010/069922 A1 tries to solve this problem by adding to the composite element an array of electrically conducting elements, made of aluminum or aluminum alloy, and including a corrosion resistant layer with aluminum hydroxide, obtained by anodizing the surface.

US 2011/049292 A1 also offers a solution with an additional layer arranged on an external surface of an aircraft component, the layer including carbon nanotubes within a polymeric material.

DE 10 2011 008574 A1, which is regarded as the closest prior art, proposes an arrangement, namely a panel with a core layer made of a honeycomb structure directly connected with one of the cover layers. A splinter protective layer is integrated in the panel, arranged between the core layer and the other cover layer and firmly connected with the latter cover layer.

### SUMMARY OF THE INVENTION

The present invention provides an improved solution for the aforementioned problems, by a structure according to claim 1, an aircraft according to claim 11, a method according to claim 12 and a use according to claim 13. In dependent claims, preferred embodiments of the invention are defined.

In a first inventive aspect, the invention provides a structure for an aircraft, comprising a composite skin having an outer face intended to be exposed to open air and at least one inner face, and a ballistic material layer, the ballistic material layer being provided on an inner face of the composite skin which is not intended to be exposed to open air.

In the whole document, "composite skin" refers to an aeronautic piece comprising composite materials, either a laminate composite skin or a sandwich structure comprising a composite material in its covers and/or its core.

Ballistic material will be understood as any material made from high stiffness and toughness, woven or laminated, polymeric fibers, being stacked in a number of layers.

In the whole document, an "inner side" of the skin refers to a side which is not intended to be seen when the skin is mounted on the aircraft. This can be the extreme inner side, i.e. the inner side most distant to the external side of the skin.

Accordingly, the "side intended to be exposed to open air" or the "exposed side" refers to the side which is intended to be seen when the skin is mounted on the aircraft, i.e. the side exposed to be struck by lightning. When a skin is made, it is obvious to the manufacturer which side is intended to be exposed to open air and which sides are not intended to be exposed to open air.

Advantageously, the provision of a ballistic material layer on an internal face of a composite skin is able to prevent the puncturing of the composite skin when struck to the maximum lightning zone 1A threat as per EUROCAE ED-84 (lp= 200KA, Al= 2.10⁶jul/ohm and duration≤ 500µs), regardless a metallization ply is added below a dielectric coating on the external side of the skin.

Advantageously, providing the puncture protection on the internal face of the structure allows this solution to be implemented once the structure has been already manufactured, without affecting aircraft external surface and, therefore, without degrading the aerodynamic behavior. Furthermore, this solution can be implemented even once the aircraft is in service (like a retrofit solution or a repair).

In a preferred embodiment of the invention, the ballistic material has an energy absorption capacity greater or equal than 40000 J/Kg.

In a preferred embodiment of the invention, the ballistic material has a sonic velocity greater or equal than 5500 m/s.

In a preferred embodiment of the invention, the ballistic material is selected from the group consisting of aramides, S-glass, S2-glass, PBO (polyphenylene benzobizoxazole), PIPD (poly[2,6-diimidazo[4,5-b:4,5-e]-pyridinylene-I,4(2,5-dihydroxy)phenilene]) and polyethylene fibers.

In a preferred embodiment of the invention, the composite skin is a composite laminate skin, preferably a carbon fiber solid laminate.

In a preferred embodiment of the invention, the composite skin is a sandwich structured skin, comprising two covers and a core arranged between the covers.

In a preferred embodiment of the invention, the ballistic material layer is placed on the inner face of the composite skin which is most distant to the external face of the skin.

In a preferred embodiment of the invention, the thickness of the ballistic material layer is equal to or greater than 1mm.

In a preferred embodiment of the invention, the ballistic material layer comprises several ballistic fibers plies.

In a preferred embodiment of the invention, the structure comprises a high dielectric material coating provided on the exposed face. Advantageously, this coating prevents moisture ingress, while also serving a decorative purpose.

In a preferred embodiment of the invention, the structure comprises a metallization layer provided on the composite skin. This allows to further control the extent of damage of the structure.

In a second inventive aspect, the invention provides an aircraft containing a structure according to any embodiment of the first inventive aspect.

In a third inventive aspect, the invention provides a method for upgrading an aircraft comprising a composite skin, the method comprising the step of providing a ballistic material layer on an inner face of the composite skin which is not intended to be exposed to open air.

In a fourth inventive aspect, the invention provides a use of a ballistic material layer as protection against lightning impact in a structure for an aircraft comprising a composite skin, wherein the ballistic material layer is provided on an inner face of the composite skin which is not intended to be exposed to open air.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows an example of layer scheme of a composite structure skin provided with a ballistic layer according to the invention.
- Figure 2: This figure shows another example of layer scheme of a sandwich structured skin provided with a ballistic layer according to the invention.
- Figure 3: This figure shows an example of layer scheme of a sandwich structured skin provided with a ballistic layer according to the invention.

### DETAILED DESCRIPTION OF THE INVENTION

The invention provides an aircraft structure comprising a composite skin (1) and a ballistic material layer (2). This skin (1) typically comprises either:
- a composite laminate comprising several carbon fiber plies, or
- a sandwich structure comprising a core (4) covered in its two external faces by composite covers (31, 32).

The ballistic material layer (2) is arranged on an inner face of the composite skin (1) and is preferably composed of several ballistic fibers plies.

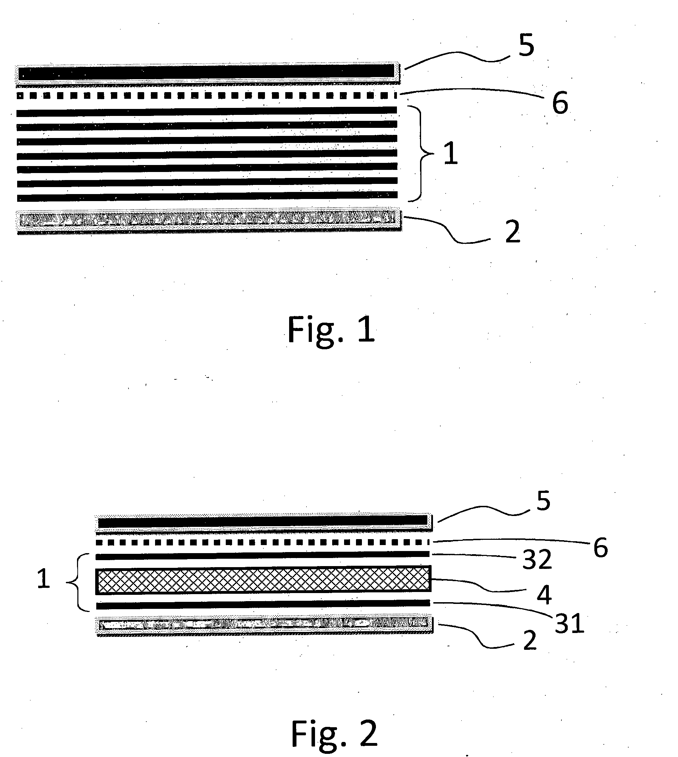

Figure 1 shows a structure according to a particular embodiment of the invention. In this embodiment, the structure comprises a composite laminate skin. The ballistic material layer (2) is provided on the inner face of the composite skin (1). In a particular embodiment, this laminate skin is less than 1.2mm thick.

Figure 2 shows a structure according to another particular embodiment of the invention. In this embodiment, the skin (1) comprises a sandwich structure comprising a core (4) and two covers (31, 32) covering the core (4): the inner cover (31) and the outer cover (32). The outer cover (32) is intended to be exposed to open air, thus conforming the external side of the skin, while the inner cover (31) is not. In this embodiment the ballistic layer (2) is placed on the extreme inner side of the sandwich skin (1), i.e. on the inner side the most distant to the external side of the skin. In a particular embodiment, each composite cover (31, 32) comprises two carbon fibers plies. In a particular embodiment, the core (4) is substantially 5mm thick.

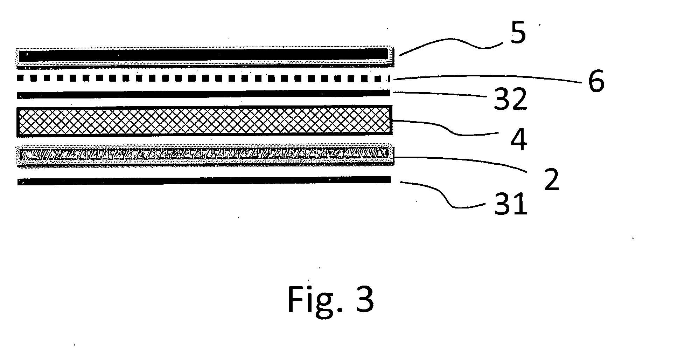

Figure 3 shows a structure according to another embodiment of the invention. In this embodiment, the composite skin (1) comprises a sandwich structure comprising a core (4) and two covers (31, 32) covering the core (4). In this particular embodiment, the ballistic laminate (2) is installed in the face between the core (4) and the inner cover (31).

In all Figures 1 to 3, the skin (1) is coated on the exposed face by a thick high dielectric material (5) for moisture ingress prevention and for decorative purposes. In a particular embodiment, a metallization layer (6) is added to further control the extent of damage of the structure.

Those ballistic materials whose energy absorption capacity is rated above 40000 J/Kg and their sonic velocity is rated above 5500 m/s are preferred, as for example aramides (e.g. Kevlar^{®} 29, Kevlar^{®} 49, Kevlar^{®} 129, Kevlar^{®} KM2, Twaron^{®}); S-glass, S2-glass PBO (polyphenylene benzobizoxazole), PIPD (poly[2,6-diimidazo[4,5-b:4,5-e]-pyridinylene-1,4(2,5-dihydroxy)phenilene]) or polyethylene fibers (Dyneema^{®}, Spectra^{®}).

## Claims

1. Structure for an aircraft, comprising:
a composite skin (1) having an outer face intended to be exposed to open air and at least one inner face, and
a ballistic material layer (2), the ballistic material layer being provided on an inner face of the composite skin which is not intended to be exposed to open air,
**characterized in that** the ballistic material layer (2) is placed on the inner face of the composite skin (1) which is most distant to the external face of the skin.

2. Structure for an aircraft according to claim 1, wherein the ballistic material has an energy absorption capacity greater or equal than 40000 J/Kg.

3. Structure for an aircraft according to any of the previous claims, wherein the ballistic material has a sonic velocity greater or equal than 5500 m/s.

4. Structure for an aircraft according to any of the previous claims, wherein the ballistic material is selected from the group consisting of aramides, S-glass, S2-glass, PBO (polyphenylene benzobizoxazole), PIPD (poly[2,6-diimidazo[4,5-b:4,5-e]-pyridinylene-1,4(2,5-dihydroxy)phenilene]) and polyethylene fibers.

5. Structure for an aircraft according to any of the previous claims, wherein the composite skin (1) is a composite laminate skin, preferably a carbon fiber solid laminate.

6. Structure for an aircraft according to any of claims 1-4, wherein the composite skin (1) is a sandwich structured skin, comprising two covers (31, 32) and a core (4) arranged between the covers (31, 32).

7. Structure for an aircraft according to any of the previous claims, wherein the thickness of the ballistic material layer (2) is equal to or greater than 1mm.

8. Structure for an aircraft according to any of the previous claims, wherein the ballistic material layer (2) comprises several ballistic fibers plies.

9. Structure for an aircraft according to any of the previous claims, the structure comprising a high dielectric material coating (5) provided on the exposed face of the composite skin.

10. Structure for an aircraft according to any of the previous claims, the structure comprising a metallization layer (6) provided on the composite skin.

11. Aircraft containing a structure according to any of the previous claims..

12. Method for upgrading an aircraft comprising a composite skin (1), the method comprising:
providing a ballistic material layer (2) on an inner face of the composite skin which is not intended to be exposed to open air,
**characterized in that** the ballistic material layer (2) is placed on the inner face of the composite skin (1) which is most distant to the external face of the skin.

13. Use of a ballistic material layer as protection against lightning impact in a structure for an aircraft comprising a composite skin, wherein the ballistic material layer is provided on an inner face of the composite skin which is not intended to be exposed to open air,
**characterized in that** the ballistic material layer (2) is placed on the inner face of the composite skin (1) which is most distant to the external face of the skin.

## Patentansprüche

1. Struktur für ein Flugzeug, umfassend:
eine Verbundhaut (1), welche eine äußere Fläche, die dazu gedacht ist, der Freiluft ausgesetzt zu sein und wenigstens eine innere Fläche aufweist, und
eine Schicht (2) aus einem ballistischen Material, wobei die Schicht aus einem ballistischen Material an einer inneren Fläche der Verbundhaut bereitgestellt ist, welche nicht dazu gedacht ist, der Freiluft ausgesetzt zu sein,
**dadurch gekennzeichnet, dass** die Schicht (2) aus einem ballistischen Material an der inneren Fläche der Verbundhaut (1) gelegen ist, die am weitesten von der äußeren Fläche der Haut entfernt ist.

2. Struktur für ein Flugzeug nach Anspruch 1, wobei das ballistische Material ein Energieaufnahmevermögen aufweist, das größer als oder gleich 40.000 J/Kg ist.

3. Struktur für ein Flugzeug nach einem der vorhergehenden Ansprüche, wobei das ballistische Material eine Schallgeschwindigkeit aufweist, die größer als oder gleich 5.500 m/s ist.

4. Struktur für ein Flugzeug nach einem der vorhergehenden Ansprüche, wobei das ballistische Material aus einer Gruppe ausgewählt wird, die aus Aramiden, S-Glas, S2-Glas, PBO (Polyphenylen-benzobizoxazol), PIPD (Poly[2,6-diimidazo[4,5-b:4,5-e]-pyridinylen-1,4(2,5-dihydroxy)phenylen]) und Polyäthylenfasern besteht.

5. Struktur für ein Flugzeug nach einem der vorhergehenden Ansprüche, wobei die Verbundhaut (1) eine Verbund-Schichtstoff-Haut ist, vorzugsweise ein Kohlenstofffaser-Fest-Schichtstoff.

6. Struktur für ein Flugzeug nach einem der Ansprüche 1 bis 4, wobei die Verbundhaut (1) eine Haut ist, die eine Sandwichstruktur aufweist, umfassend zwei Deckschichten (31, 32) und einen Kern (4), der zwischen den Deckschichten (31, 32) angeordnet ist.

7. Struktur für ein Flugzeug nach einem der vorhergehenden Ansprüche, wobei die Dicke der Schicht (2) aus einem ballistischen Material gleich oder größer als 1 mm ist.

8. Struktur für ein Flugzeug nach einem der vorhergehenden Ansprüche, wobei die Schicht (2) aus einem ballistischen Material einige Schichten aus ballistischen Fasern umfasst.

9. Struktur für ein Flugzeug nach einem der vorhergehenden Ansprüche, wobei die Struktur eine Beschichtung (5) aus einem hoch dielektrischen Material umfasst, die an der freiliegenden Fläche der Verbundhaut bereitgestellt ist.

10. Struktur für ein Flugzeug nach einem der vorhergehenden Ansprüche, wobei die Struktur eine Metallisierungsschicht (6) umfasst, die an der Verbundhaut bereitgestellt ist.

11. Flugzeug umfassend eine Struktur nach einem der vorhergehenden Ansprüche.

12. Verfahren zum Verbessern eines Flugzeugs, umfassend eine Verbundhaut (1), wobei das Verfahren umfasst:
Bereitstellen einer Schicht (2) aus einem ballistischen Material an einer inneren Fläche der Verbundhaut, die nicht dazu gedacht ist, der Freiluft ausgesetzt zu sein,
**dadurch gekennzeichnet, dass** die Schicht (2) aus einem ballistischen Material an der inneren Fläche der Verbundhaut (1) gelegen ist, die am weitesten von der äußeren Fläche der Haut entfernt ist.

13. Verwendung einer Schicht aus einem ballistischen Material als ein Schutz gegen Blitzeinschlag in einer Struktur für ein Flugzeug, umfassend eine Verbundhaut, wobei die Schicht aus einem ballistischen Material an einer inneren Fläche der Verbundhaut bereitgestellt ist, die nicht dazu gedacht ist, der Freiluft ausgesetzt zu sein,
**dadurch gekennzeichnet, dass** die Schicht (2) aus einem ballistischen Material an der inneren Fläche der Verbundhaut (1) gelegen ist, die von der äußeren Fläche der Haut am weitesten entfernt ist.

## Revendications

1. Structure pour un aéronef, comprenant:
un revêtement composite (1) ayant une face extérieure destinée à être exposée à l'air libre et au moins une face intérieure, et
une couche de matériau balistique (2), la couche matériau balistique étant disposée sur une face intérieure du revêtement composite qui n'est pas destinée à être exposée à l'air libre,
**caractérisée en ce que** la couche de matériau balistique (2) est placée sur la face intérieure du revêtement composite (1) qui est la plus éloignée de la face externe du revêtement.

2. Structure pour un aéronef selon la revendication 1, dans laquelle le matériau balistique a une capacité d'absorption d'énergie supérieure ou égale à 40 000 J/kg.

3. Structure pour un aéronef selon l'une quelconque des revendications précédentes, dans laquelle le matériau balistique à une vitesse sonique supérieure ou égale à 5 500 m/s.

4. Structure pour un aéronef selon l'une quelconque des revendications précédentes, dans laquelle le matériau balistique est choisi parmi le groupe constitué d'aramides, S-glass, S2-glass, de PBO (polyphénylène benzobizoxazole), de PIPD (poly[2,6-diimidazo[4,5-b :4,5-e]-pyridinylène-1,4(2,5-dihydroxy)phénylène]) et de fibres de polyéthylène.

5. Structure pour un aéronef selon l'une quelconque des revendications précédentes, dans laquelle le revêtement composite (1) est un revêtement stratifié composite, de préférence un stratifié solide en fibres de carbone.

6. Structure pour un aéronef selon l'une quelconque des revendications 1 à 4, dans laquelle le revêtement composite (1) est un revêtement structuré en sandwich, comprenant deux enveloppes (31, 32) et un coeur (4) disposé entre les enveloppes (31, 32).

7. Structure pour un aéronef selon l'une quelconque des revendications précédentes, dans laquelle l'épaisseur de la couche de matériau balistique (2) est supérieure ou égale à 1 mm.

8. Structure pour un aéronef selon l'une quelconque des revendications précédentes, dans laquelle la couche de matériau balistique (2) comprendre plusieurs plis de fibres balistiques.

9. Structure pour un aéronef selon l'une quelconque des revendications précédentes, comprenant un revêtement en matériau à résistance diélectrique élevée (5) disposé sur la face exposée du revêtement composite.

10. Structure pour un aéronef selon l'une quelconque des revendications précédentes, la structure comprenant une couche de métallisation (6) disposée sur le revêtement composite.

11. Aéronef contenant une structure selon l'une quelconque des revendications précédentes.

12. Procédé pour améliorer un aéronef comprenant un revêtement composite (1), le procédé comprenant l'étape:
disposer une couche de matériau balistique (2) sur une face intérieure du revêtement composite qui n'est pas destinée à être exposée à l'air libre,
**caractérisé en ce que** la couche de matériau balistique (2) est placée sur la face intérieure du revêtement composite (1) qui est la plus éloignée de la face externe du revêtement.

13. Utilisation d'une couche de matériau balistique comme protection contre l'impact de la foudre dans une structure pour un aéronef comprenant un revêtement composite, dans laquelle la couche de matériau balistique est disposée sur une face intérieure du revêtement composite (1) qui n'est pas destinée à être exposée à l'air libre,
**caractérisée en ce que** la couche de matériau balistique (2) est placée sur la face intérieure du revêtement composite (1) qui est la plus éloignée de la face externe du revêtement.
